# EUROPÄISCHE PATENTSCHRIFT

(11) **EP 0 754 875 B1**
(45) Veröffentlichungstag und Bekanntmachung des Hinweises auf die Patenterteilung: **10.05.2000**
(21) Anmeldenummer: 95120219.1
(22) Anmeldetag: 20.12.1995
(51) Int. Cl.: F16D 66/02

(54) **Bremsbackenanordnung für Scheibenbremsen sowie Verfahren zu deren Herstellung**
Brake pad arrangement for disc brakes and procedure for its manufacture
Dispositif de garniture pour frein à disque ainsi que procédé pour son obtention

(30) Priorität: 21.07.1995 DE 19526607
(43) Veröffentlichungstag der Anmeldung: 22.01.1997
(73) Patentinhaber: BBA Friction GmbH, 51375 Leverkusen (DE)
(72) Erfinder: Rothmann, Werner, D-45134 Essen (DE)

(56) Entgegenhaltungen:
- EP-A- 0 546 759
- GB-A- 1 264 573
- US-A- 4 298 857
- US-A- 4 685 540
- US-A- 5 250 588

## Beschreibung

Die Erfindung betrifft eine Bremsbackenanordnung für Scheibenbremsen, die eine Trägerplatte mit einem daran befestigten duroplastischen Reibmaterial aufweist und mit einem elektrischen mehrstufigen Verschleißanzeiger ausgerüstet ist sowie ein Verfahren zur Herstellung einer Bremsbacke.

Es ist allgemein üblich, Bremsbeläge, d.h. Bremsbacken mit Verschleißanzeigervorrichtungen zu versehen. Weit verbreitet sind die einstufigen elektrischen Verschleißanzeiger, die lediglich anzeigen, daß der Grenzwert der Abnutzung des Belages erreicht ist.
Immer wichtiger wird jedoch der Einsatz von kontinuierlichen bzw. mehrstufigen Verschleißanzeigern, die nicht nur den Grenzwert, sondern dem Fahrer die einzelnen Verschleißstufen der Beläge anzeigen, so daß sich die Lebenserwartung jederzeit abschätzen läßt.

Zur Ermittlung der kontinuierlichen Abnutzung werden im allgemeinen Dioden und Widerstandsschaltungen (DE 38 18 877 und DE 41 39 546) verwendet, deren Leiterschleifen parallel zum Belag verschlissen werden und die Stromänderung ein Maß für die Abnutzung darstellt.

Die Trägerplatte und der Reibbelag werden üblicherweise im Druckpreßverfahren hergestellt, d.h. daß eine Reibmaterialmischung in ein Preßnest in gewünschter Menge eingebracht, dann die Trägerplatte aufgelegt wird und diese beiden Teile unter Druck und Temperatur verbunden werden. Das Reibmaterial ist eine duroplastische Materialmischung, die unter Temperatureinwirkung aushärtet. Häufig unterstützen zusätzliche Kleber auf der Trägerplatte oder Zwischenschichten die Haftung auf der Trägerplatte. Die Montage von Zubehörteilen wie Verschleißanzeiger erfolgt nach dem Aushärten und Schleifen der Bremsbacken.

Einstufige und mehrstufige Verschleißanzeiger werden bekannterweise in Ausnehmungen des Reibmaterials an der Trägerplatte befestigt. Die Ausnehmung zur Montage des Verschleißanzeigers wird dabei entweder im Rahmen des Preßvorganges angeformt oder nachträglich eingearbeitet.

Insbesondere einstufige Verschleißanzeiger werden häufig in Bohrungen, die durch die Trägerplatte in das Reibmaterial reichen, von der dem Reibbelag abgewandten Seite der Trägerplatte eingebracht ( EP 0546 759). Die Verschleißanzeigerkörper sind mittels Steckerelementen lösbar mit den elektrischen Anzeigeinstrument verbunden, wobei diese übliche hohle Fortsätze aufweisen in die ein Stecker einschnappen kann. Dabei ragen die Verschleißanzeigerkörper weit über die Trägerplatte hinaus und sind bei der Handhabung der Gefahr der Beschädigung ausgesetzt.

Ggf. notwendige Ausnehmungen im Reibmaterial zur Aufnahme von Verschleißanzeigern führen zu Reibflächenverlusten, da die entsprechenden Ausnehmungen nicht mehr zur Bremswirkung beitragen. Gerade bei großen Bremsbacken, z.B. für Nutzfahrzeuge kann sich dies bemerkbar machen.

Derartige Verschleißanzeigerbefestigungen werden nach der Fertigbearbeitung, d.h. dem Schleifen und Beschriften in Handarbeit montiert. Diese Verfahrensweise ist sehr unwirtschaftlich, zumal die Bremsbacken gegebenenfalls durch zusätzliche Arbeiten, wie Bohren und Säubern von Aufnahmen vorbereitet werden müssen.
Im weiteren Handling der Bremsbacken sind allgemein übliche von außen eingesetzte Verschleißanzeiger der Gefahr der Beschädigung ausgesetzt.

Die GB 12 64 573 zeigt eine ähnliche Anordnung eines Verschleißanzeigers an einem Trommelbremsbelag, wobei der Verschleißanzeigerkörper von der Reibbelagseite in einer reibbelagfreinen Zone montiert ist und sich über einen Bund an der Trägerplatte abstützt. Die auf der reibbelagabgewandten Trägeplattenseite herausragenden Verschleißanzeigekörperelemente sind ebenfalls beim Handling der Beschädigungsgefahr ausgesetzt. Zur Fixierung des Verschleißanzeigers ist in jedem Fall das zugehörige Steckerelemnet notwendig, so daß eine Montage nur beim Einbau in die Bremse erfolgen kann.

Aus der US 4298857 ist bekannt, daß ein Verschleißanzeigerkörper vor dem Aufpressen eines Reibmaterials von der reibbelagabgewandten Seite der Trägerplatte eingesetzt wird, so daß das Ende dieses Körpers vom Reibmaterial umpreßt wird. Der Verschleißanzeigerkörper stellt in diesem Fall den Leiterkörper dar und ist durch elektrisch nicht leitende Schichten von der Trägerplatte zu trennen. Die axiale Fixierung des Leiterkörpers kann nur aufwendig über das Steckerelement, durch Preßpassung oder Klebung erfolgen.

Der Erfindung liegt somit die Aufgabe zugrunde, eine Bremsbackenanordnung zu schaffen, die eine sichere Befestigung des Verschleißanzeigers an der Bremsbacke gewährleistet, den Reibflächenverlust mindert, den Verschleißanzeiger vor Beschädigungen schützt und die Herstellung wirtschaftlicher gestaltet.

Die Aufgabe wird erfindungsgemäß dadurch gelöst, daß der Verschleißanzeigerkörper mit einem Fortsatz reibbelagseitig in eine Durchgangsöffnung der Trägerplatte eingesetzt ist, wobei sich der radiale Bund axial gegen die Trägerplatte abstützt und der Verschleißanzeigerkörper mit Widerstandsnetz sich senkrecht zur Trägerplattenebene in den Reibbelag erstreckt.

Eine solche Bremsbackenanordnung wird vorzugsweise derart hergestellt, daß in die Trägerplatte eine Durchgangsöffnung eingebracht wird, daß vor dem Aufpressen des Reibmaterials der Verschleißanzeigerkörper reibbelagseitig in die Durchgangsöffnung eingesetzt wird, die Öffnung von der gegenüberliegenden Seite der Trägerplatte mittels eines Stopfens verschlossen wird, so daß die elektrischen Kontakte und die Steckkappenaufnahme vor Verschmutzung geschützt sind und der Körper fixiert wird, das Reibmaterial anschließend aufgepreßt wird und danach der Schutzstopfen zur späteren Montage der Steckkappe entfernt wird.

Die mit der Erfindung erreichten Vorteile bestehen insbesondere darin, daß durch das Aufpressen des Reibmaterials auf die Trägerplatte bei vormontierten Verschleißanzeiger, dieser unlösbar im Reibmaterial eingebunden ist und nicht unbeabsichtigt seine Lage verändern kann.
Die Ausnehmungen im Reibbelag zur Aufnahme der Verschleißanzeiger werden derart minimiert, daß die Reibfläche maximal genutzt wird.
Durch die vollständige Einkapselung des Verschleißanzeigerkörpers im Reibmaterial ist dieser vor Beschädigungen, die durch die Handhabung auftreten können, weitestgehend geschützt. Dadurch können insbesondere bei den elektrischen Zuleitungen, die gemäß der Erfindung frühestens nach der Fertigbearbeitung, vorteilhafterweise erst beim Einbau in die Bremse, montiert werden, die Transportschäden minimiert werden. So kann z.B. durch den getrennten Transport von Bremsbacke und elektrischer Zuleitung , das Durchscheuern der Zuleitungen vermieden werden.
Des weiteren sind die Bremsbacken ohne Stecker und Zuleitungen leichter handhabbar, insbesondere stapelbar.

Durch die dargestellte Verfahrensweise entfallen die sonst notwendigen Vorarbeiten zur nachträglichen Montage eines Verschleißanzeigers, denn dazu müssen Bohrungen angebracht oder von Verschmutzungen entfernt werden. Die notwendige Durchgangsöffnung in der Trägerplatte wird im gleichen Stanzprozeß erzeugt mit dem die notwendigen Verankerungsausnehmungen erzeugt werden.

Die Anlage des radialen Bundes des Verschleißanzeigerkörpers an die reibelagzugewandte Trägerplattenfläche sorgt für eine exakte Positionierung.

Vorzugsweise ist vorgesehen, daß der Verschleißanzeigerkörper aus einem hitzebeständigen duroplastischen Material mit Reibmaterialeigenschaften besteht. Eine weitere Ausgestaltung der Erfindung sieht vor, daß der Verschleißanzeigerkörper aus dem Reibmaterial besteht, das bei der vorgesehenen Bremsbacke verwendet wird.
Außer dem Widerstandsnetzwerk, bzw. den Leiterschleifen, vorzugsweise aus metallischem Werkstoff, trägt somit auch der Verschleißanzeigerkörper zur Reibleistung bei.

Vorzugsweise ist vorgesehen , daß die elektrischen Zuleitungen mittels Steckkontakte durch die Fortsätze der Steckkappe und des Verschleißanzeigerkörpers geführt werden.
Die Lage des Verschleißanzeigers ist somit abgesehen von der Konstruktion der Bremsbackenaufnahme frei wählbar. Entsprechende Durchgangsöffnungen zur Aufnahme des Verschleißanzeigers lassen sich in einfacher Weise unter Berücksichtigung eines Mindestabstandes vom Trägerplattenrand in jedem Bereich der Trägerplatte herstellen.

Vorzugsweise ist vorgesehen, daß der Verschleißanzeigerkörper einen hohlen Fortsatz aufweist, wo sich im inneren Bereich eine radial umlaufende Vertiefung erstreckt in die ein radial umlaufender äußerer Vorsprung des Fortsatzes der Steckkappe oder einer Schutzkappe einschnappen kann. Damit ist eine formschlüssige sichere Befestigung der Steckkappe im rauhen Betrieb der Bremse, als auch die sichere Befestigung des Verschleißanzeigerkörpers mittels eine Schutzkappe vor und während dem Verpressen des Reibbelages gewährleistet.

Vorzugsweise ist vorgesehen, daß die radial umlaufende Vertiefung am Vorsprung des Verschleißanzeigekörpers halbkreisförmig ist.

Vorzugsweise ist vorgesehen, daß die radial umlaufende Vertiefung V-förmig gestaltet ist.

Vorzugsweise ist vorgesehen, daß sich zusätzlich zur radial umlaufenden Vertiefung von dem Fortsatzende ein Innengewinde zur Aufnahme eines Gewindestopfens in den Fortsatz erstreckt. Damit kann alternativ eine Schutzkappe in Form eines Gewindestopfens mittels des Gewindes befestigt werden. Dies hat den Vorteil, daß die Montage und Demontage dieser Schutzkappe leicht zu automatisieren ist. Zudem läßt sich alternativ eine Anschlußkappe mit entsprechendem Außengewinde auf dem zugehörigen Fortsatz einschrauben.

Im folgenden werden unter Bezugnahme auf die Zeichnungen Ausführungsbeispiele der Erfindung näher erläutert.

Es zeigen:
- Fig. 1 :: Eine Ansicht einer erfindungsgemäß hergestellen Bremsbacke für Scheibenbremsen mit Verschleißanzeiger.
- Fig. 2 :: Eine Draufsicht gemäß Fig. 1.
- Fig. 3 :: Einen Ausschnitt einer erfindungsgemäß hergestellten Bremsbacke für Scheibenbremsen im Querschnitt.
- Fig. 4 :: Einen Querschnittsdarstellung gemäß Fig. 3 mit eingesetzter Steckkappe
- Fig. 5 :: Eine Querschnittsdarstellung gemäß Fig. 3 mit eingesetzter Schutzkappe.
- Fig. 6 :: Eine Ansicht eines Verschleißanzeigerköpers mit alternativer Befestigungsvertiefung im hohlen Fortsatz.
- Fig. 7 :: Eine Ansicht eines Verschleißanzeigerkörpers im Querschnitt mit zusätzlichem Gewinde.

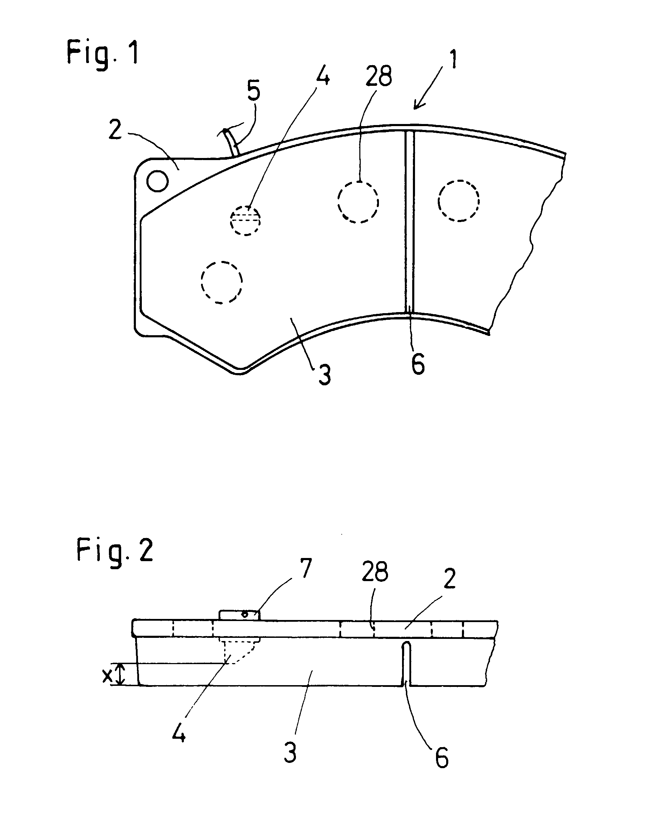

Die in Fig. 1 gezeigte Bremsbacke 1 besteht im einzelnen aus einer Trägerplatte 2, die meist aus metallischem Werkstoff besteht, einem darauf aufgebrachten Reibbelag 3 und einem kontinuierlich bzw. mehrstufig messenden Verschleißanzeiger 4 der im Reibbelag 3 eingebettet ist.
Die Lage des Verschleißanzeigers 4 ist so gewählt, daß die elektrischen Zuleitungen 5 auf der reibbelagabgewandten Seite der Trägerplatte 2 geführt werden können. Die Nut 6 im Reibbelag 3 dient zur Aufnahme von Abrieb und Regenwasser im Fahrbetrieb. In der Trägerplatte 2 sind mehrere Verankerungslöcher 28 eingebracht, in die das Reibmaterial eingepreßt wird , wodurch eine formschlüssige Verbindung zwischen Trägerplatte 2 und Reibbelag 3 gebildet wird. Die Verschleißanzeigeröffnung 14 werden mittels eines Stanzprozesses erzeugt.

Fig . 2 zeigt die in Fig. 1 beschriebene Bremsbacke in der Draufsicht. Die Lage des Verschleißanzeigers 4 im Reibbelag 3 ist gestrichelt dargestellt. In diesem Fall beginnt der Meßbereich erst ab einer definierten Verschleißtiefe "x" des Reibbelages 3.
Die Steckkappe 7 mit den elektrischen Zuleitungen 5 ist von der reibbelagabgewandten Seite der Trägerplatte 2 eingebracht.

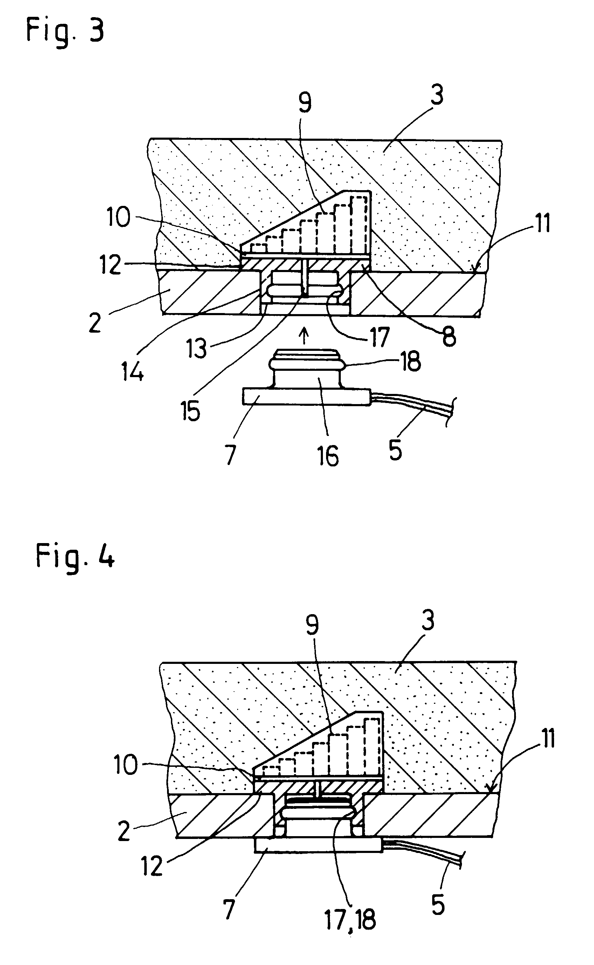

Fig. 3 zeigt einen Ausschnitt der Bremsbacke 1 im Verschleißanzeigerbereich im Schnitt, bevor die Steckkappe 7 eingesetzt wird.
Der Verschleißanzeigerkörper 8 ist vollständig vom Reibbelag 3 umgeben, die Leiterschleifen 9 der Verschleißanzeigerschaltung sind auf einer Schaltungsplatine 10, die parallel zur Trägerplattenfläche 11 angeordnet ist, angebracht und vollständig im Verschleißanzeigerkörpermaterial, das aus einem hitzebeständigen duroplastischen Material mit Reibmaterialeigenschaften besteht, eingebettet. Die Leiterschleifen 8 erstrecken sich senkrecht zur Trägerplattenfläche 11 in den Reibbelag 3.
Am Verschleißanzeigerkörper 8 ist ein radialer Bund 12 angeordnet, der sich in axialer Richtung an der Trägerplattenfläche 11 abstützt und damit dem Verschleißanzeigerkörper eine definierte Position ermöglicht. An den radialen Bund 12 schließt sich ein Fortsatz 13 an , der in die Durchgangsöffnung 14 der Trägerplatte 2, die hier in Form einer kreisförmigen Ausnehmung realisiert ist, hineinreicht. Die Durchgangsöffnung 14 kann entweder gebohrt oder in einfacher Weise durchgestanzt werden. Der Stanzprozeß bietet sich dazu an, da ohnehin üblicherweise Verankerungsausnehmungen 28 bei der Herstellung der Trägerplatten ausgestanzt werden. Dies ließe sich in einem Arbeitgang herstellen.
Der Fortsatz 13 des Verschleißanzeigerkörpers 8 wird im leichten Preßsitz in die Durchgangsöffnung eingesetzt.
Von der Schaltungsplatine 10 ausgehend ist ein vorzugsweise zweipoliger Kontaktstift 15 zentral im Fortsatz 13 angeordnet. Dieser soll mittels einer in der Steckkappe 7 befindlichen korrespondierenden zweipoligen Kontakthülse und der elektrischen Zuleitung 5 die elektrische Verbindung zum Anzeigeinstrument herstellen.
Eine Anordnung zweier Kontaktstifte 15 mit entsprechenden Gegenhülsen ist möglich. Der Fortsatz 13 ist zur Aufnahme des Steckkappenfortsatzes 16 und des Kontaktstiftes 15 hohl ausgebildet und weist am vom Bund 12 abgewandten Ende eine radiale umlaufende halbkreisförmige Vertiefung 17 auf.
Die Steckkappe 7 mit ihren elektrischen Zuleitungen 5 weist ebenso einen Fortsatz 16 auf. Der Außendurchmesser des Fortsatzes 16 ist maximal so groß wie der Innendurchmesser des Fortsatzes 13 des Verschleißanzeigekörpers.
Der Fortsatz 16 weist einen radialen umlaufenden Vorsprung 18 auf, der in die korrespondierende Vertiefung 17 des Fortsatzes des Verschleißanzeigekörpers einschnappt.

Fig. 3 zeigt die Situation vor der Montage der Steckkappe 7 nach der Fertigbearbeitung des Belages, d.h. den Schleif- und Kennzeichnungsprozessen, vorzugsweise nach dem Einbau des Belages in die Bremse.

Fig. 4 zeigt den in Fig. 3 gezeigten Ausschnitt mit eingesetzter Steckkappe 7.

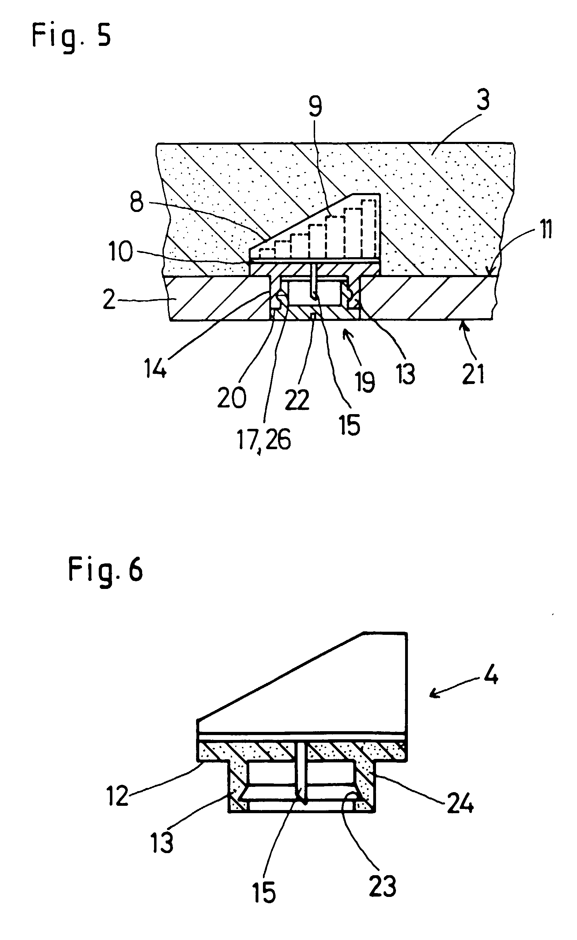

Fig. 5 zeigt einen Ausschnitt der Bremsbacke 1 im Verschleißanzeigerbereich im Schnitt, nach dem Aufbringen des Reibbelages 3. Dabei ist der Schutzstopfen 19 eingesteckt, der Beschädigungen und Verschmutzungen des Innenbereiches des Verschleißanzeigerkörperfortsatzes 13 vermeiden soll. Der Stopfen weist den gleichen Fortsatz wie die Steckkappe 7 mit entsprechendem radialen Vorsprung 26 auf.
Der Fortsatz 13 des Verschleißanzeigerkörpers 8 reicht nur soweit in die Durchgangsöffnung 14 der Trägerplatte 2 hinein, so daß der Bund 20 des Schutzstopfens 19 im montiertem Zustand nicht über die reibbelagabgewandten Trägerplattenfläche 21 hinausragt. Dadurch benötigt das Preßwerkzeug keine spezielle Ausnehmung zur Aufnahme überstehender Teile. Es können bestehende Werkzeuge unverändert genutzt werden.
Zur Entfernung des Schutzstopfens 19 ist in der Rückseite des Bundes 20 eine Ausnehmung 22 angebracht, um den Stopfen 19 mit mechanischen Hilfsmitteln fassen und entfernen zu können. Der Schutzstopfen besteht aus einem hitzebeständigen Material.

Fig.6 zeigt ein Ausführungsbeispiel eines Verschleißanzeigerkörpers, das statt einer halbkreisförmigen radial umlaufenden Vertiefung eine V-förmige Vertiefung 23 im hohlen Fortsatz 13 aufweist. Das Verschleißanzeigerkörpermaterial 24 besteht alternativ aus dem Reibmaterial, das für den Reibbelag 3 verwendet wird.

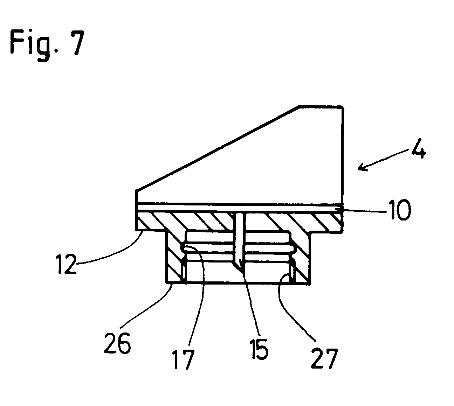

Fig. 7 zeigt ein weiteres Ausführungsbeispiel eines Verschleißanzeigerkörpers, das zusätzlich zur radial umlaufenden Vertiefung 17 vom Fortsatzende 25 ausgehend ein Innengewinde 27 zur Aufnahme eines Gewindestopfens angebracht ist. Der Durchmesser der umlaufenden Vertiefung 17 ist größer als der Gewindedurchmesser. Das Gewinde dient zur Befestigung eines Gewindestopfens, der alternativ zum Schutzstopfen 19 verwendet werden kann, um den Innenbereich des Verschleißanzeigerkörperfortsatzes 13 vor Beschädigung und Verschmutzung zu schützen und den Verschleißanzeiger 4 zumindest bis nach dem Aufbringen des Reibbelages in der Durchgangsöffnung 14 der Trägerplatte 2 zu fixieren. Der Gewindestopfen wird vor dem Verbinden des Reibbelages 3 mit der Trägerplatte 2 mit dem Verschleißanzeiger 4 montiert.
Der Einschraub- und Ausschraubvorgang kann mit einfachen Mitteln automatisiert werden. Der Gewindestopfen weist dazu auf der dem Gewinde abgekehrten Ende eine Schlitz-, Kreutzschlitz- oder Sechskantausnehmung zur Aufnahme entsprechender Montierwerkzeuge auf.

## Patentansprüche

1. Bremsbackenanordnung für Scheibenbremsen, die eine Trägerplatte (2) mit einem daran befestigten duroplastischen Reibmaterial (3) aufweist und mit einem elektrisch kontinuierlich bzw. mehrstufig messenden Verschleißanzeiger (4) ausgerüstet ist, dessen Verschleißanzeigerkörper (8) mit einem radialen Bund (12) versehen und vom Reibmaterial (4) umpreßt ist, dadurch gekennzeichnet, daß der Verschleißanzeigerkörper (8) mit einem Fortsatz (13) reibbelagseitig in eine Durchgangsöffnung (14) der Trägerplatte (2) eingesetzt ist, wobei sich der radiale Bund (12) axial gegen die Trägerplatte (2) abstützt und der Verschleißanzeigerkörper (8) mit Widerstandsnetzwerk (9) sich senkrecht zur Trägerplattenebene (11) in den Reibbelag (3) erstreckt.

2. Bremsbackenanordnung nach Anspruch 1 dadurch gekennzeichnet, daß der Verschleißanzeigerkörper (8) mit Fortsatz (13) aus einem hitzebeständigen duroplastischen Material besteht.

3. Bremsbackenanordnung nach Anspruch 2 dadurch gekennzeichnet, daß der Verschleißanzeigerkörper (8) mit Fortsatz (13) aus demselben Material besteht wie der Reibbelag.

4. Bremsbackenanordnung nach einem der Ansprüche 1 bis 3 dadurch gekennzeichnet, daß die elektrischen Zuleitungen (5) mittels Steckkontakte (15) durch den Fortsatz (13) und die Steckkappe (7) geführt werden.

5. Bremsbackenanordnung nach einem der Ansprüche 1 bis 4 dadurch gekennzeichnet, daß der Verschleißanzeigerkörper (8) einen hohlen Fortsatz (13), der in eine Trägerplattenausnehmung (14) eingreift, aufweist, wo sich im inneren Bereich eine radial umlaufende Vertiefung (17) erstreckt, in die der radial umlaufende äußere Vorsprung (18) des Fortsatzes (16) der Steckkappe (7) oder der Schutzkappe (19) einschnappen kann.

6. Bremsbackenanordnung nach Anspruch 5 dadurch gekennzeichnet, daß die radial umlaufende Vertiefung (17) halbkreisförmig ist.

7. Bremsbackenanordnung nach Anspruch 5 dadurch gekennzeichnet, daß die radial umlaufende Vertiefung (17) V-förmig gestaltet ist.

8. Bremsbackenanordnung nach Anspruch 5, 6 oder 7 dadurch gekennzeichnet, daß sich zusätzlich zur radial umlaufenden Vertiefung (17) vom Fortsatzende (26) ein Innengewinde (27) zur Aufnahme eines Gewindestopfens (19) in den Fortsatz (16) erstreckt.

9. Verfahren zur Herstellung einer Bremsbackenanordnung nach einem der Ansprüche 1 bis 8 dadurch gekennzeichnet, daß in die Trägerplatte (2) eine Durchgangsöffnung (14) eingebracht wird, daß vor dem Aufpressen des Reibmaterials (3) der Verschleißanzeigerkörper (8) reibbelagseitig in die Durchgangsöffnung (14) eingesetzt wird, die Öffnung von der gegenüberliegenden Seite der Trägerplatte (2) mittels eines Stopfens (19) verschlossen wird, so daß die elektrischen Kontakte (15) und die Steckkappenaufnahme vor Verschmutzung geschützt werden und der Körper (8) fixiert wird, das Reibmaterial (3) anschließend aufgepreßt wird und danach der Schutzstopfen (19) zur späteren Montage der Steckkappe (7) entfernt wird.

## Claims

1. Brake shoe configuration for disc brakes, consisting of a backing plate (2)with a duroplastic friction material (3) fastened thereto and equipped with an electrical wear indicator (4) for continuous or multi-stage measurement, of which the wear indicator body (8) is equipped with a radial shoulder (12) and which is surround-moulded by friction material (4), characterised in that the wear indicator body (8) is inserted by means of an extension (13) into a through hole (14) provided in the backing plate (2) at the friction material side, whereby the radial shoulder (12) rests axially on the backing plate(2), and the wear indicator body (8) with resistor network (9) extends into the friction pad (3) vertically to the backing plate (11).

2. Brake shoe configuration according to claim 1, characterised in that the wear indicator body (8) with extension (13) consists of a heat-resistant duroplastic material.

3. Brake shoe configuration according to claim 2, characterised in that the wear indicator body (8) with extension (13) consists of the same material as the friction material.

4. Brake shoe configuration according to claims 1 to 3, characterised in that the electrical lead wires (5) are guided through the extension (13) and the plug-type cap (7) by means of plug contacts (15).

5. Brake shoe configuration according to claim 1 to 4, characterised in that the wear indicator body (8) is provided with a hollow extension (13) engaged into a recess (14) in the backing plate , the inner area comprising a radially circumferential groove (17) into which the radially circumferential outer projection (18) of the extension (16) of the plug-type cap (7) or of the protective cap (19) can be snapped.

6. Brake shoe configuration according to claim 5, characterised in that the radially circumferential groove (17) forms a semi-circle.

7. Brake shoe configuration according to claim 5, characterised in that that radially circumferential groove (17) is V-shaped.

8. Brake shoe configuration according to claim 5, 6 or 7, characterised in that in addition to the radially circumferential groove (17) an internal thread (27) extends from the end of the extension (26) into the extension (16) to accomodate a threaded plug(19).

9. Procedure to manufacture a brake shoe configuration according to any one of claims 1 to 8, characterised in that a through hole (14) is provided in the backing plate (2), the wear indicator body (8) is inserted into the through hole (14) on the friction side before the friction material (3) is pressed on, the opening at the opposite side of the backing plate (2) is closed by a plug (19) so that the electrical contacts (15) and the seat of the pug-type cap are protected against the ingress of dirt while fixating the body (8), the friction material (3) is subsequently pressed on and the protective plug (19) is removed for mounting the plug-type cap (7).

## Revendications

1. Arrangement de segments de freins pour freins à disque, comportant une plaque-support (2) où est fixé un matériau de friction thermodurcisseur (3), et équipé d'un indicateur d'usure électrique (4) , mesurant en continu ou par intermittence, du quelle le corps de l'indicateur d'usure (8) est assorti d'un épaulement radial (12) et enrobé du matériau de friction(4) , caractérisé en ce que du côté de la garniture de friction, le corps de l'indicateur d'usure (8) avec un prolongement (13) est enchâssé dans une ouverture traversant (14) de la plaque-support (2), et où, l'epaulement radial (12) prend appui en direction axiale sur la plaque-support (2),et que le corps de l'indicateur d'usure (8) avec réseau de résistances (9) s'étend perpendiculairement au plan de la plaque-support (11) dans la garniture de friction (3).

2. Arrangement de segments de freins selon la revendication 1, caractérisé en ce que le corps de l'indicateur d'usure (8) avec prolongement (13) est constitué d'un matériau thermodurcisseur résistant aux températures élevées.

3. Arrangement de segments de freins selon la revendication 2, caractérisé en ce que le corps de l'indicateur d'usure (8) avec prolongement (13) est constitué du matériau de friction (3).

4. Arrangement de segments de freins selon les revendications 1 à 3, caractérisé en ce que les conduites électriques (5) passent, au moyen de contacts enfichables(15), à travers le prolongement (3) et la calotte enfichable (7).

5. Arrangement de segments de freins selon la revendication 1 à 4, caractérisé en ce que le corps de l'indicateur d'usure (8) comprend un prolongement creux (13) qui s'accroche à un creux de la plaque-support (14), et où, dans la partie intérieure, s'étend une rainure évoluant en direction radiale (17), dans laquelle la partie saillante (18) du prolongement (16,7), évoluant elle aussi en direction radiale, ou le bouchon de protection ((19) peut s'enclencher.

6. Arrangement de segments de freins selon la revendication 5, caractérisé en ce que la rainure évoluant en direction radiale (17) est semi-circulaire.

7. Arrangement de segments de freins selon la revendication 5, caractérisé en ce que la rainure évoluant en direction radiale (17) est en forme de V.

8. Arrangement de segments de freins selon la revendication 5, 6 ou 7, caractérisé en ce qu'en plus de la rainure évoluant en direction radiale (17), un filet intérieur (27) s'étend dans le prolongement à partir du bout (26) de celui-ci pour accueillir un bouchon fileté (19).

9. Procédé de fabrication d'un arrangement de segments de freins selon l'une des revendications 1 à 8, caractérisé en ce qu'une ouverture (14) est aménagée dans la plaque-support (2) , qu'avant d'appliquer par pression le matériau de friction (3), le corps de l'indicateur d'usure (8) est enchâssé dans cette ouverture (14) du côté de la garniture de friction, que l'ouverture est fermée par un bouchon du côté (19) opposé de la plaque-support (2) pour ainsi protéger les contacts électriques (15) et le logement de la calotte enfichable contre l'encrassement et que le corps (8) est fixé, que le matériau de friction (3) est ensuite appliqué par pression et que le bouchon de protection (19) est retiré pour ainsi permettre le montage de la calotte enfichable (7).
